(19) Europäisches Patentamt
European Patent Office
Office européen des brevets

(11) **EP 3 450 048 A1**

(12) **EUROPEAN PATENT APPLICATION**
published in accordance with Art. 153(4) EPC

(43) Date of publication:
**06.03.2019 Bulletin 2019/10**

(21) Application number: **16900612.9**

(22) Date of filing: **24.11.2016**

(51) Int Cl.:
**B22D 11/108** *(2006.01)*          **B22D 11/111** *(2006.01)*
**B22D 11/16** *(2006.01)*

(86) International application number:
**PCT/KR2016/013627**

(87) International publication number:
**WO 2017/188539 (02.11.2017 Gazette 2017/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **29.04.2016 KR 20160053137**

(71) Applicant: **Posco**
**Pohang-si, Gyeongsangbuk-do 37859 (KR)**

(72) Inventors:
• **CHUNG, Tae In**
**Pohang-si**
**Gyeongsangbuk-do 37591 (KR)**
• **KIM, Yong Hwan**
**Pohang-si**
**Gyeongsangbuk-do 37837 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **MOLD FLUX AND CASTING METHOD USING SAME**

(57)     The present invention relates to mold flux and a casting method using the same. The mold flux to be injected into an upper portion of molten steel in mold during the casting contains 2 to 10 mass% CaSi and 4.4 to 46.1 mass% transition metal oxide with respect to 100 mass% of the mold flux to slow down the heat transfer speed between the mold and the solidified layer of the molten steel, thereby improving the quality and the productivity of the slab.

【Figure 3】

EP 3 450 048 A1

**Description**

## TECHNICAL FIELD

The present invention relates to mold flux and a casting method using the same, and more particularly to mold flux and a casting method using the same, which may improve a quality and productivity of a slab.

## BACKGROUND ART

Generally, a slab is manufactured by cooling molten steel received in a mold through a cooling zone. For example, in a continuous casting process, the molten steel is injected into a mold having a certain internal shape, and a semi-solidified slab is continuously drawn downward of the mold to produce a semi-finished product having various shapes such as slab, bloom, billet and beam blank.

In this continuous casting process, the slab is first cooled in the mold, and after passing through the mold, the slab is sprayed with water to be cooled secondarily and solidification proceeds. Molten steel is solidified from the edge of the mold, at this time, the mold vibrates periodically to generate friction, which results in continuous molten steel injection and progress of solidification in the mold.

In addition, mold flux is applied to an upper portion of the molten steel in the mold so that lubrication may smoothly proceed during vibration of the mold. The mold flux forms a powder layer, a sintered layer and ae liquid phase layer by sensible heat of the molten steel.

The liquid phase layer of the mold flux injected into the upper portion of the molten steel inflows between the solidified layer and the mold to minimize the friction. In addition, the liquid phase layer re-solidifies at a mold wall and plays an important role in controlling a heat transfer speed.

In this connection, it is classified into low carbon steel, medium carbon steel and high carbon steel with respect to a carbon content of the steel, and the slabs casted using each steel show different surface qualities. Among them, medium carbon steel having a carbon content of 0.07 to 0.2 mass% in steel is sharply increased due to rapid phase transformation during solidification compared with the low carbon steel and the high carbon steel, and thus a surface shape becomes uneven. This is because during the phase transformation of the medium carbon steel, the solidification in which a liquid phase transforms into a solid phase proceeds and at this same time, a sudden transformation in the solid phase occurs as it passes a peritectic point._Such rapid solidification contraction and transformation of the medium carbon steel form a non-uniform solidified layer in the slab, and cause surface defects such as surface cracks due to severe surface irregularities.

In order to solve these problems, there are various technologies to minimize unevenness due to the rapid solidification by forming at least a part of the mold with a material having a high thermal conductivity and by increasing a basicity of the mold flux to reduce the ratio of the liquid phase layer having a good heat transfer efficiency.

However, in the former case, a durability of the mold is deteriorated, which makes it difficult to use the mold in the casting process for a long time. In addition, in the latter case, as the basicity of the mold flux increases the ratio of the liquid phase layer decreases and a viscosity increases, thereby the mold flux does not inflow smoothly between the mold and the solidified layer, the lubrication, which is a basic role of the mold flux, becomes insufficient. As a result, an accident that the solidified layer of the molten steel is confined to the mold may occur frequently.

## DISCLOSURE OF THE INVENTION

### TECHNICAL PROBLEM

The present invention provides mold flux and a casting method using the same to improve a casting efficiency.

The present invention provides mold flux and a casting method using the same to improve a quality of a slab.

### TECHNICAL SOLUTION

Mold flux according to an embodiment of the present invention is mold flux to be injected into an upper portion of molten steel in a mold during casting, the mold flux may contain 2 to 10 mass% CaSi and 4.4 to 46.1 mass% transition metal oxide with respect to 100 mass% of the mold flux.

The mold flux may further contain $SiO_2$, CaO, $Al_2O_3$, MgO, $Na_2O$, and F, and a ratio of CaO and $SiO_2$ ($CaO/SiO_2$) may be larger than 0.8 and smaller than 1.5.

The transition metal oxide may include at least one of FeO, NiO, and $Cr_2O_3$.

The FeO may be contained in an amount of 4.4 to 16.4 mass% with respect to 100 mass% of the mold flux.

The NiO may be contained in an amount of 4.7 to 17.5 mass% with respect to 100 mass% of the mold flux.

The $Cr_2O_3$ may be contained in an amount of 12.5 to 46.1 mass% with respect to 100 mass% of the mold flux.

The mold flux may have a viscosity ranging from 0.5 to 3.0 poise (g/cm.s) at a melting temperature of 1300 °C.

A casting method according to an embodiment of the present invention including: preparing mold flux containing thermogenic agent and transition metal oxide; injecting molten steel into a mold; supplying the mold flux to an upper portion of the molten steel; and casting a slab by solidifying the molten steel, a solidification speed of the molten steel may be slowed down using oxidation heat generated as the thermogenic agent is oxidized in casting of the slab.

The molten steel may contain medium carbon steel containing 0.07 to 0.2 mass% of carbon with respect to 100 mass% of the molten steel.

In the preparation of the mold flux, the mold flux may be prepared by mixing 2 to 10 mass% of the thermogenic agent and 4.4 to 46.1 mass% of the transition metal oxide with respect to 100 mass% of the mold flux.

The mold flux may further contain $SiO_2$, CaO, $Al_2O_3$, MgO, $Na_2O$, and F, and a ratio of CaO and $SiO_2$ ($CaO/SiO_2$) may be larger than 0.8 and smaller than 1.5.

The thermogenic agent may include CaSi.

The transition metal oxide may include at least one of FeO, NiO, and $Cr_2O_3$.

A content of the transition metal oxide may be calculated by following Equations 1) to 3):

$$\text{Equation 1) } FeO[mass\%]=A(CaSi[mass\%])+B$$

$$\text{Equation 2) } NiO[mass\%]=C(CaSi[mass\%])+D$$

$$\text{Equation 3) } Cr_2O_3[mass\%]=E(CaSi[mass\%])+F$$

(where, A=1.5, B=1.4, C=1.6, D=1.5, E=4.2, F=4.1).

The thermogenic agent may be oxidized with at least one of the transition metal oxides to generate oxidation heat.

The transition metal oxide may react with the thermogenic agent such that the transition metal oxide may present in a metal particle form in the mold flux.

The metal particles may block or scatter radiant heat between the mold and the molten steel.

**ADVANTAGEOUS EFFECTS**

According to embodiments of the present invention, in casting of a slab using medium carbon steel, molten steel may be uniformly solidified by reducing a transfer speed of heat, which is transferred during solidification of the molten steel using heat generation and heat-shield functions of the mold flux.

Therefore, it is possible to suppress or prevent occurrence of a non-uniform solidified layer in the slab due to rapid solidification contraction and transformation during casting, thereby preventing occurrence of large surface defects on the slab surface.

**BRIEF DESCRIPTION OF DRAWINGS**

Figure 1 is a schematic view of a casting equipment according to an embodiment of the present invention.
Figure 2 shows a main configuration of the casting equipment shown in Figure 1.
Figure 3 is a block diagram showing a configuration of mold flux according to an embodiment of the present invention.
Figure 4 is a graph showing experimental results showing changes in a heat flux occur when a slab is casted via a casting method according to the embodiment of the present invention.

**MODE FOR CARRYING OUT THE INVENTION**

Hereinafter, an embodiment of the present invention will now be described in detail with reference to the accompanying drawings. The present invention may, however, be embodied in many different forms and should not be construed as limited to the embodiments set forth herein, rather, these embodiments are provided by way of illustration only and so that this disclosure will be thorough, complete and will fully convey the full scope of the invention to those skilled in the art.

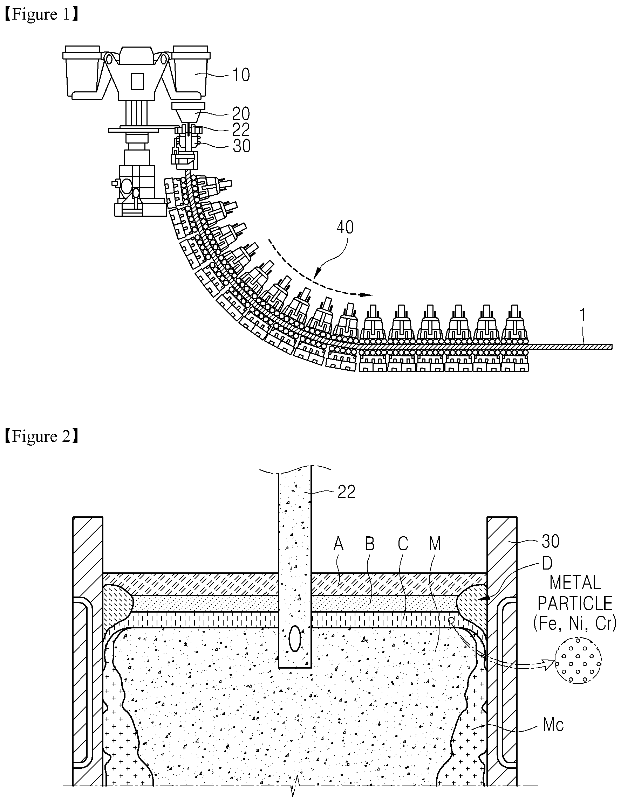

Figure 1 is a schematic view of a casting equipment according to an embodiment of the present invention,

Figure 2 shows a main configuration of the casting equipment shown in Figure 1.

Referring to Figure 1, a casting equipment according to an embodiment of the present invention may include a ladle 10 configured for receiving molten steel refined in a steelmaking process therein; a tundish 20 configured for receiving the molten steel through an injecting nozzle (unshown) connected to the ladle 10, storing the molten steel therein temporarily and supplying it to a mold 30; the mold 30 configured for receiving the molten steel through a submerged nozzle 22 connected to the tundish 20 and changing the molten steel into an initial solidified layer (Mc) in a uniform shape; a cooling line 40 disposed below the mold 30 and having a plurality of segments continuously arranged for performing a series of molding operations while cooling an unsolidified slab 1 drawn from the mold 30.

Referring to Figure 2, when casting is started and the molten steel M in the tundish 20 is injected into the mold 30 via a submerged nozzle 22, mold flux may be supplied to an upper portion of the molten steel injected into the mold 30. The mold flux is supplied to the upper portion of the molten steel in a solid phase, for example, powder state, and melted by sensible heat of the molten steel. A part of the melted mold flux forms a liquid phase layer C, and the remaining part forms a sintered layer B at the upper portion of the molten steel, and a powder layer A at a top layer. In addition, in the vicinity of the mold 30, the mold flux is solidified by cooling water supplied to the mold 30 to form a slag rim D. Herein, the mold flux is supplied as the solid phase to the molten steel in the mold 30, but may be supplied as the liquid phase via melting in a separate melting furnace.

The liquid phase layer C formed in this manner inflows between the mold 30 and the molten steel by vibration imparted to the mold 30 and lubricates the slab, so that the slab may be smoothly casted. In addition to the lubrication, the mold flux may perform functions such as absorptive removal of inclusions in the molten steel, thermal insulation of the molten steel, and transfer speed control of heat to the mold 30.

In this connection, medium carbon steel containing 0.07 to 0.2 mass% of carbon in the molten steel has sharply increased shrinkage due to rapid phase transformation during the solidification compared to low carbon steel and high carbon steel. Thus, the molten steel forms a non-uniform solidified layer, and the slab to be casted has an irregular surface shape. In the present invention, the non-uniform solidification of the molten steel, i.e. the medium carbon steel, may be minimized by controlling components of the mold flux to slow down the heat transfer speed of the heat in the mold during casting. To this end, the present invention may slow down the heat transfer speed in the mold by applying heat generation and heat-shield functions to the mold flux.

The mold flux according to the embodiment of the present invention includes CaSi as thermogenic agent to impart the heat generation function and includes transition metal oxide to impart an oxidization function for oxidizing the thermogenic agent, and the heat-shield function.

The mold flux may contain 2 to 10 mass% of thermogenic agent and 4.4 to 46.1 mass% of the transition metal oxide. In this connection, CaSi as the thermogenic agent may be included, and at least one of FeO, NiO and $Cr_2O_3$ as the transition metal oxide may be included. The mold flux may have a viscosity ranging from 0.5 to 3.0 poise (g/cm.s) at a melting temperature of 1300 degree.

In addition, the mold flux may include a main mold flux containing $SiO_2$, CaO, $Al_2O_3$, MgO, $Na_2O$ and F.

CaO and $SiO_2$ may be contained such that the ratio of CaO and $SiO_2$ ($CaO/SiO_2$) is larger than 0.8 and smaller than 1.5 at 100 mass%, except for the thermogenic agent, the transition metal oxide, $Al_2O_3$, MgO, $Na_2O$ and F. In this connection, CaO and $SiO_2$ may satisfy $SiO_2$ content of larger than 7.2 to smaller than 31.4 mass% and CaO to larger than 5.7 to smaller than 47 mass% of the mold flux, and the ratio of CaO and $SiO_2$ ($CaO/SiO_2$) may be larger than 0.8 but smaller than 1.5 simultaneously. When the ratio of CaO to $SiO_2$ is smaller than 0.8, the viscosity of the mold flux increases sharply and the lubrication function may be degraded because it does not inflow uniformly between the mold and the solidified layer. When the ratio of CaO and $SiO_2$ is larger than 1.5, the melting temperature of the mold flux becomes high and melting becomes difficult, so that unmelted mold flux may flow into the molten steel and cause the surface defects of the slab. Otherwise, even if the mold flux is melted, when the liquid phase layer in which the mold flux is melted is solidified, the solid phase ratio is increased, so that a smooth lubrication effect may not be expected and an accident such as breakout etc. may occur.

$Al_2O_3$ in the main mold flux increases the viscosity and raises melting point of the mold slag. $Al_2O_3$ may be contained in an amount of 3 to 7 mass% of the total mass of the mold flux. When $Al_2O_3$ is smaller than 3 mass%, it may not maintain a sufficient viscosity and melting point and may be melted excessively, and then it may be excessively inflow between the solidified layer and the mold, thereby causing the surface defects of the slab. When $Al_2O_3$ is contained in an amount exceeding 7 mass%, the melting point of the mold flux is raised, so that it is not sufficiently melted and the unmelted mold flux may flow into the slab, causing the surface defects of the slab. Also, even if a portion of the mold flux is melted to form the liquid phase layer, it may not perform the lubrication function sufficiently due to the high viscosity, so that it may cause the accident such as the breakout and the like.

MgO affects the crystal phase during solidification of the mold slag. MgO may be contained in an amount of 2.0 to 5 mass% of the total mass of the mold flux. When the content of MgO exceeds 5 mass%, production of cuspidine ($3CaO_2 \cdot SiO_2 \cdot CaF_2$), which is a representative crystal phase of the mold slag, is delayed. Thus, the heat transfer control effect, which should be controlled sufficiently to suppress the rapid solidification shrinkage in the medium carbon steel, may not be exhibited. On the other hand, when the content of MgO is smaller than 2.0 mass%, the production amount of the cuspidine is increased and the ratio of the liquid phase is decreased, thereby adversely affecting the lubrication function. Herein, the mold slag means the mold flux injected into the mold.

$Na_2O$ is a representative alkaline oxide and serves to lower the viscosity and melting point of the liquid phase mold slag. $Na_2O$ may be contained in an amount of 2 to 9 mass% of the total mass of the mold flux. When the content of $Na_2O$ is smaller than 4 mass%, the mold flux is not sufficiently melted due to the high melting point, so that the mold flux may inflow unevenly between the mold and the solidified layer, which may cause the surface defects of the slab. When the content of $Na_2O$ exceeds 9 mass%, the molten flux is melted excessively due to lowered melting point, so that the ratio of the liquid phase layer is increased, which may cause excessive inflow between the mold and the solidified layer. Therefore, a depth of an oscillation mark formed on the surface of the slab is deepened, which may cause the surface defects of the slab, and melting loss of the submerged nozzle increases.

F serves to lower the viscosity and melting point of the liquid phase layer, and in addition, it forms the cuspidine ($3CaO_2 \cdot SiO_2 \cdot SCaF_2$), which is the main crystal phase during solidification of the mold slag. F may be contained in an amount of 6 to 10 mass% of the total mass of the mold flux. When F content is smaller than 6 mass%, it is difficult to form the crystal phase sufficiently, and the heat transfer effect in the mold may be lowered. Therefore, in the medium carbon steel, non-uniform heat transfer behavior may occur and the surface defects of the slab may increase. Otherwise, when F content is larger than 10 mass%, the amount of the liquid phase layer is increased due to the excessively lowered viscosity and melting point, so that the mold flux is excessively inflow between the mold and the solidified layer, so that causes deeper depth of the oscillation mark on the slab surface, resulting in the surface defects of the slab and increased melting loss of the submerged nozzle.

The thermogenic agent containing CaSi reacts with oxygen in the air in casting as shown in Equation 1 below to generate oxidation heat for preventing the molten steel from solidifying rapidly and for achieving uniform solidification of the molten steel.

Equation 1)

$$CaSi + O_2 = CaO + SiO_2 + \text{oxidation heat}$$

In addition, the amount of the oxygen reacting with the thermogenic agent during casting may be negligible since there are the sintered layer and powder layer above the liquid phase layer of the mold flux. Therefore, the transition metal oxide as the oxidizing agent for the smooth oxidation of the thermogenic agent may be added into the mold flux. Therefore, the thermogenic agent may react with the transition metal oxide as shown in Equation 2 below to generate the oxidation heat.

Equation 2)

$$CaSi + \text{transition metal oxide } (FeO, NiO, Cr_2O_3) = CaO + SiO_2 + \text{metal particle } (Fe, Ni, Cr) + \text{oxidation heat}$$

The thermogenic agent may generate the oxidation heat through the oxidation reaction as shown in the above Equations (1) and (2). The oxidation heat thus generated may suppress or prevent the rapid solidification contraction by lowering the heat transfer speed in the mold to retard solidification speed of the molten steel.

The thermogenic agent may be contained in an amount of 2 to 10 mass% of the total mass of the mold flux. When the content of the thermogenic agent is smaller than 2 mass%, heat that is able to control the heat transfer speed in the mold may not be generated. When the content of the thermogenic agent is larger than 10 mass%, the amount of heat generated is excessively high, so that the melt speed of the mold flux is increased, and the liquid phase layer is excessively formed. Thus, the amount of inflow of the mold flux between the mold and the solidified layer increases and the surface defects of the slab increases. In addition, this increases the temperature of the liquid phase layer of the mold flux excessively, since the viscosity of the mold flux is inversely proportional to the temperature, the viscosity of the mold flux is lowered so that the mold flux is mixed into the molten steel at a melting level of the mold to cause the surface defects of the slab. Such temperature measurement based on the content of the thermogenic agent was performed via (DTA, Differential Thermal Analysis).

The transition metal oxide may oxidize the thermogenic agent smoothly to generate the oxidation heat. The transition metal oxide may serve as the oxidizing agent to oxidize the thermogenic agent and at the same time serve as a blocking agent to scatter and block radiant heat between the mold and the solidified layer via forming metal particles through reduction with the reaction with the thermogenic agent. The transition metal oxide may be at least one of FeO, NiO, and $Cr_2O_3$, and the content of the thermogenic agent may be appropriately adjusted within a range of 2 to 10 mass%. In addition, an addition amount of the transition metal oxide may be yielded by the following Equation 3) to 5) based on the type of the transition metal oxide.

$$Equation\ 3)$$

$$FeO[mass\%]=A(CaSi[mass\%])+B$$

$$(A=1.5, B=1.4)$$

$$Equation\ 4)$$

$$NiO[mass\%]=C(CaSi[mass\%])+D$$

$$(C=1.6, D=1.5)$$

$$Equation\ 5)$$

$$Cr_2O_3[mass\%]=E(CaSi[mass\%])+F$$

$$(E=4.2, F=4.1)$$

According to the above Equations 3) to 5), FeO may be included in an amount of 4.4 to 16.4 mass%, NiO may be included in an amount of 4.7 to 17.5 mass%, and $Cr_2O_3$ may be included in an amount of 12.5 to 46.1 mass% of the total mass of the mold flux. When the content of the transition metal oxide is smaller than the proposed range, i.e. the range defined by the type of the transition metal oxide, for example, smaller than 4.4 mass%, 4.7 mass%, or 12.5 mass%, CaSi as the thermogenic agent cannot contribute to the sufficient oxidation reaction, so that unoxidized CaSi particles remains in the slag. As a result, melting may not be sufficiently achieved, and the viscosity of the mold flux is rapidly increased. Therefore, the mold flux may not inflow sufficiently between the mold and the solidified layer, which may lead to the accident such as the breakout. On the other hand, when the content of the transition metal oxide is higher than the proposed range, i.e. the range defined by the type of the transition metal oxide, the transition metal oxide remains in the mold flux after the metal oxide is consumed to oxidize CaSi, as the thermogenic agent sufficiently, thereby raising the melting point of the mold flux. As a result, the mold flux is not sufficiently melted and the unmelted mold flux inflows between the solidified layer and the mold, which may cause the defects on the slab surface. In addition, the lubrication function is adversely influenced, which may cause the accident such as the breakout.

The transition metal oxide may be reduced as it oxidizes the thermogenic agent and may present in a metal particle form in the mold flux. The metal particles such as Fe, Ni, and Cr, that is the transition metal particles have a higher melting point than the melting point of the flux, so that they may remain in the particle state as shown in Figure 2 without melting in the flux. These metal particles may block the transfer of the radiant heat in the mold flux to the mold, for example, via scattering the radiant heat to slow down the heat transfer speed.

Hereinafter, a casting method according to the embodiment of the present invention will be described.

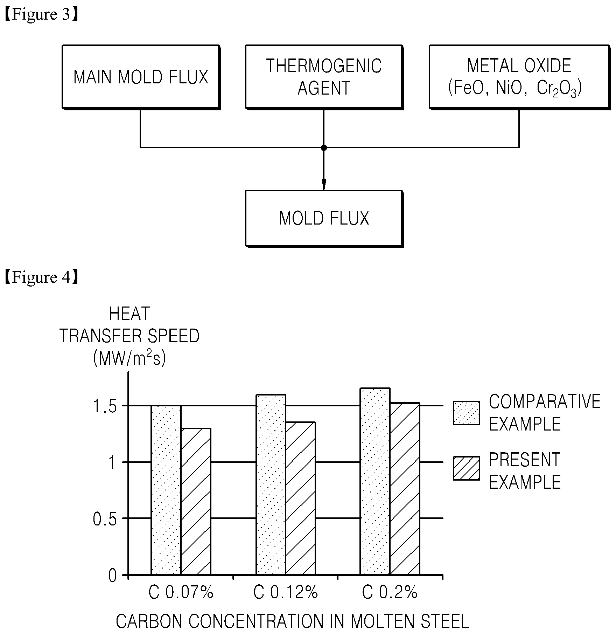

Figure 3 is a block diagram showing a configuration of the mold flux according to the embodiment of the present invention.

The casting method according to the embodiment of the present invention may include: preparing the mold flux; preparing the molten steel; injecting the molten steel passed through the ladle 10 and the tundish 20 into the mold 30; injecting the molten mold flux to an upper portion of the molten steel injected into the mold 30; and solidifying the molten steel to cast the slab. It is possible to delay the solidification speed of the molten steel during casting of the slab.

As shown in Figure 3, during the preparation of the mold flux, main mold flux containing $SiO_2$, CaO, $Al_2O_3$, MgO, $Na_2O$ and F, and mold flux mixed with the thermogenic agent and the transition metal oxide may be prepared. In this connection, the thermogenic agent may be contained in an amount of 2 to 10 mass% of the mold flux, and the content of the transition metal oxide may be yielded via the above equations 3 to 5 based on the content of the thermogenic agent. Further, the content of the main mold flux in the mold flux may be an amount excluding the thermogenic agent, the transition metal oxide and unavoidable impurities from 100 mass% from the mold flux.

During the preparation of the molten steel, molten steel having a controlled carbon content of 0.07 to 0.2 mass% may be prepared via a refinement such as a converter refinement process.

Once the mold flux and the molten steel are prepared, the molten steel is injected into the mold 30 using the submerged nozzle 22 through the ladle 10, tundish 20.

Then, once the molten steel is injected into the mold 30, or during the injection, the mold flux is supplied to the upper portion of the molten steel.

The mold flux supplied to the upper portion of the molten steel may be at least partially melted by the sensible heat of the molten steel to form the liquid phase layer C at the upper portion of the molten steel. At this time, the sintered layer B and the powder layer A may be formed above the liquid phase layer C.

In the liquid phase layer C of the mold flux, the thermogenic agent reacts with the oxygen in the air and the transition metal oxide doped in the mold flux, resulting in reaction heat, i.e. oxidation heat. In addition, in the liquid phase layer C, the reaction between the thermogenic agent and the transition metal oxide generates the reaction heat, that is, the oxidation heat. Due to the reaction between the thermogenic agent and the transition metal oxide, the transition metal oxide is present as the metal particles in the liquid phase layer C. Thus generated oxidation heat may effect an adiabatic effect and prevent the molten steel from rapidly solidifying by the heat transfer in the mold. This is because the speed of the heat transfer in the mold is slowed down by the oxidation heat, which makes it possible to form a uniform solidified layer. Further, the metal particles present in the liquid phase layer C are not melted by the sensible heat of the molten steel, but block the transfer of the radiant heat in the molten steel to the mold or scatter the radiant heat to suppress the rapid solidification of the molten steel.

Hereinafter, an experimental example of casting the slab via the casting method according to the present invention will be described.

Figure 4 is a graph showing experimental results showing changes in a heat flux occur when the slab is casted via the casting method according to the embodiment of the present invention.

In this experimental example, the changes of the heat transfer speed based on the carbon content in the casting using medium carbon steel containing 0.07 to 0.2 mass% carbon were examined. In this connection, in the present example, the mold flux according to the embodiment of the present invention, i.e. the mold containing the main mold flux, the thermogenic agent and the transition metal oxide was used. On the other hand, in a comparative example, experiments were conducted using mold flux not containing the thermogenic agent and the transition metal oxide, for example, main mold flux. Further, in the present example, 5 mass% of CaSi, and 8.9 mass% of FeO, which is the transition metal oxide were used with respect to 100 mass% of the mold flux.

As shown in Figure 4, when the carbon mass with respect to the total mass of the molten steel was 0.07 mass%, about 1.5 $MW/m^2s$ of the heat transfer speed was measured in the comparative example, and about 1.3 $MW/m^2s$ of the heat transfer speed was measured in the present example.

Further, when the carbon mass with respect to the total mass of the molten steel was 0.12 mass%, about 1.6 $MW/m^2s$ of the heat transfer speed was measured in the comparative example, and about 1.4 $MW/m^2s$ of the heat transfer speed was measured in the present example.

When the carbon mass with respect to the total mass of the molten steel was 0.2 mass%, about 1.7 $MW/m^2s$ of the heat transfer speed was measured in the comparative example, and about 1.5 $MW/m^2s$ of the heat transfer speed was measured in the present example.

From the above results, it was found that the heat transfer speed gradually increases as the carbon mass in the molten steel increases in both comparative example and present example. In addition, in the case of casting using the mold flux including the thermogenic agent and the transition metal oxide according to the present invention, it may be seen that the heat transfer speed was slowed down by about 0.2 $MW/m^2s$ in comparison with the comparative example using the mold flux not containing the thermogenic agent and the transition metal oxide in casting. This may be because of the heat generation function by the reaction heat generated by the reaction between the thermogenic agent and the transition metal oxide, for example, the oxidation heat, and the heat-shield function by the metal particles generated after the reaction. Therefore, when the heat generation and heat-shield functions are imparted to the mold flux using the thermogenic agent and the transition metal oxide in casting of the slab using the medium carbon steel, the heat transfer speed between the mold and the molten steel may be slowed down to suppress the rapid solidification contraction of the molten steel, thereby improving quality of the slab.

As such, although the detailed description of the present invention has been provided for specific embodiments, it should be understood that various modifications may be made without departing from the scope of the present invention. Therefore, the scope of the present invention should not be construed as limited to the described embodiments, but should be determined by the claims appended hereto, as well as the appended claims.

## INDUSTRIAL APPLICABILITY

The mold flux according to the embodiment of the present invention and the casting method using the same may improve the quality and productivity of the slab via suppressing or preventing the occurrence of the uneven solidified layer due to the rapid solidification contraction and the transformation during the casting.

**Claims**

1. Mold flux to be injected into an upper portion of molten steel in a mold during casting, the mold flux containing:

   2 to 10 mass% CaSi and 4.4 to 46.1 mass% transition metal oxide with respect to 100 mass% of the mold flux.

2. The mold flux of claim 1, wherein the mold flux further contains $SiO_2$, CaO, $Al_2O_3$, MgO, $Na_2O$, and F,
   wherein a ratio of CaO and $SiO_2$ (CaO/$SiO_2$) is larger than 0.8 and smaller than 1.5.

3. The mold flux of claim 2, wherein the transition metal oxide includes at least one of FeO, NiO, and $Cr_2O_3$.

4. The mold flux of claim 3, wherein the FeO is contained in an amount of 4.4 to 16.4 mass% with respect to 100 mass% of the mold flux.

5. The mold flux of claim 3, wherein the NiO is contained in an amount of 4.7 to 17.5 mass% with respect to 100 mass% of the mold flux.

6. The mold flux of claim 3, wherein the $Cr_2O_3$ is contained in an amount of 12.5 to 46.1 mass% with respect to 100 mass% of the mold flux.

7. The mold flux of any one of claims 1 to 6, wherein the mold flux has a viscosity ranging from 0.5 to 3.0 poise (g/cm.s) at a melting temperature of 1300 °C.

8. A casting method comprising:

   preparing mold flux containing thermogenic agent and transition metal oxide;
   injecting molten steel into a mold;
   supplying the mold flux to an upper portion of the molten steel; and
   casting a slab by solidifying the molten steel,
   wherein a solidification speed of the molten steel is slowed down using oxidation heat generated as the thermogenic agent is oxidized in casting of the slab.

9. The casting method of claim 8, wherein the molten steel contains medium carbon steel containing 0.07 to 0.2 mass% of carbon with respect to 100 mass% of the molten steel.

10. The casting method of claim 9, wherein in the preparation of the mold flux, the mold flux is prepared by mixing 2 to 10 mass% of the thermogenic agent and 4.4 to 46.1 mass% of the transition metal oxide with respect to 100 mass% of the mold flux.

11. The casting method of claim 10,
    wherein the mold flux further contains $SiO_2$, CaO, $Al_2O_3$, MgO, $Na_2O$, and F,
    wherein a ratio of CaO and $SiO_2$ (CaO/$SiO_2$) is larger than 0.8 and smaller than 1.5.

12. The casting method of claim 11, wherein the thermogenic agent includes CaSi.

13. The casting method of claim 12, wherein the transition metal oxide includes at least one of FeO, NiO, and $Cr_2O_3$.

14. The casting method of claim 13, wherein a content of the transition metal oxide is calculated by following Equations 1) to 3):

$$\text{Equation 1) } FeO[mass\%]=A(CaSi[mass\%])+B$$

$$\text{Equation 2) } NiO[mass\%]=C(CaSi[mass\%])+D$$

$$\text{Equation 3) } Cr_2O_3[mass\%]=E(CaSi[mass\%])+F$$

(where, A=1.5, B=1.4, C=1.6, D=1.5, E=4.2, F=4.1).

15. The casting method of claim 14, wherein the thermogenic agent is oxidized with at least one of the transition metal oxides to generate oxidation heat.

16. The casting method of claim 15, wherein the transition metal oxide reacts with the thermogenic agent such that the transition metal oxide is present in a metal particle form in the mold flux.

17. The casting method of claim 16, wherein the metal particles block or scatter radiant heat between the mold and the molten steel.

【Figure 1】

【Figure 2】

【Figure 3】

```
┌─────────────────────┐   ┌─────────────────────┐   ┌─────────────────────┐
│                     │   │    THERMOGENIC      │   │    METAL OXIDE      │
│  MAIN MOLD FLUX     │   │      AGENT          │   │ (FeO, NiO, Cr₂O₃)   │
│                     │   │                     │   │                     │
└─────────────────────┘   └─────────────────────┘   └─────────────────────┘
```

$$(FeO,\ NiO,\ Cr_2O_3)$$

```
                    ┌─────────────────────┐
                    │                     │
                    │     MOLD FLUX       │
                    │                     │
                    └─────────────────────┘
```

【Figure 4】

HEAT
TRANSFER SPEED
$(MW/m^2s)$

CARBON CONCENTRATION IN MOLTEN STEEL

COMPARATIVE EXAMPLE
PRESENT EXAMPLE

C 0.07%   C 0.12%   C 0.2%

## INTERNATIONAL SEARCH REPORT

| | International application No. |
|---|---|
| | **PCT/KR2016/013627** |

### A. CLASSIFICATION OF SUBJECT MATTER

*B22D 11/108(2006.01)i, B22D 11/111(2006.01)i, B22D 11/16(2006.01)i*

According to International Patent Classification (IPC) or to both national classification and IPC

### B. FIELDS SEARCHED

Minimum documentation searched (classification system followed by classification symbols)
B22D 11/108; B22D 11/10; B22D 11/111; B22D 11/16

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: mold flux, CaSi, dislocation metal oxide, viscosity, casting

### C. DOCUMENTS CONSIDERED TO BE RELEVANT

| Category* | Citation of document, with indication, where appropriate, of the relevant passages | Relevant to claim No. |
|---|---|---|
| X | JP 08-057615 A (NISSHIN STEEL CO., LTD.) 05 March 1996<br>See paragraphs [0001]-[0018]; and figures 1-4. | 1,8-10 |
| Y | | 2-7,11-17 |
| Y | KR 10-2012-0051411 A (POSCO) 22 May 2012<br>See paragraphs [0001]-[0078]; and figure 1. | 2-7,11-17 |
| A | JP 2003-053497 A (HIRONO KAGAKU KOGYO K.K. et al.) 26 February 2003<br>See paragraphs [0001]-[0044]; and figures 1-2. | 1-17 |
| A | KR 10-2013-0009472 A (POSCO) 23 January 2013<br>See paragraphs [0008]-[0047]; and figure 1. | 1-17 |
| A | KR 10-2002-0044896 A (POSCO) 19 June 2002<br>See page 2, line 30-page 3, line 5; and figure 1. | 1-17 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 MARCH 2017 (17.03.2017) | **17 MARCH 2017 (17.03.2017)** |

| Name and mailing address of the ISA/KR<br>Korean Intellectual Property Office<br>Government Complex-Daejeon, 189 Seonsa-ro, Daejeon 302-701, Republic of Korea<br>Facsimile No. +82-42-481-8578 | Authorized officer<br><br>Telephone No. |
|---|---|

Form PCT/ISA/210 (second sheet) (January 2015)

**INTERNATIONAL SEARCH REPORT**
Information on patent family members

International application No.

**PCT/KR2016/013627**

| Patent document cited in search report | Publication date | Patent family member | Publication date |
|---|---|---|---|
| JP 08-057615 A | 05/03/1996 | NONE | |
| KR 10-2012-0051411 A | 22/05/2012 | KR 10-1320026 B1 | 21/10/2013 |
| JP 2003-053497 A | 26/02/2003 | NONE | |
| KR 10-2013-0009472 A | 23/01/2013 | NONE | |
| KR 10-2002-0044896 A | 19/06/2002 | KR 10-0516461 B1 | 23/09/2005 |

Form PCT/ISA/210 (patent family annex) (January 2015)